# EUROPÄISCHE PATENTSCHRIFT

(11) **EP 0 372 221 B1**
(45) Veröffentlichungstag und Bekanntmachung des Hinweises auf die Patenterteilung: **19.01.2000**
(21) Anmeldenummer: 89120169.1
(22) Anmeldetag: 31.10.1989
(51) Int. Cl.: C08G 63/08, C08G 63/78, C08G 64/02, B01J 19/20

(54) **Kontinuierliches Verfahren zur Herstellung von resorbierbaren Polyestern und deren Verwendung**
Continuous process for the preparation of resorbable polyesters, and their use
Procédé continu de préparation de polyesters résorbables et leur utilisation

(30) Priorität: 01.11.1988 DE 3837084
(43) Veröffentlichungstag der Anmeldung: 13.06.1990
(73) Patentinhaber: Boehringer Ingelheim Pharma KG, 55216 Ingelheim am Rhein (DE); BOEHRINGER INGELHEIM INTERNATIONAL GmbH, 55218 Ingelheim am Rhein (DE)
(72) Erfinder: Reichert, Dieter, Dr., D-6507 Ingelheim/Rh. (DE); Klingler, Franz Dietrich, Dr., D-6500 Mainz-Bretzenheim (DE); Schwall, Horst, Dr., D-6535 Gau-Algesheim (DE); Christmann, Albrecht, Dr., D-6507 Ingelheim/Rh. (DE); Buchholz, Berthold, Dr., D-6507 Ingelheim/Rh. (DE)
(74) Vertreter: Laudien, Dieter, Dr.

(56) Entgegenhaltungen:
- EP-A- 0 264 926
- DE-A- 1 545 174
- FR-A- 1 309 178
- FR-A- 1 330 721
- GB-A- 1 017 463

## Beschreibung

Die vorliegende Erfindung betrifft ein kontinuierliches Verfahren zur Herstellung von resorbierbaren Polyestern.

Resorbierbare Polyester, insbesondere solche auf der Basis von cyclischen Estern von Hydroxycarbonsäuren, finden verstärkt Anwendung auf dem Gebiet chirurgischer Materialien, wie z.B. Nahtmaterial Klipse, Klamnern, Vorrichtungen zur Osteosynthese, als Trägermaterialien für galenische Zubereitungen in Form enteraler und parenteraler Wirkstoffträger.

Verfahren zur Herstellung solcher Polymere sind aus dem Stand der Technik in zahlreichen Variationen bekannt, wobei sich unterschiedlichste Eigenschaften der Polymere in Abhängigkeit der Zusammensetzung der Momomeren und den Polymerisationsbedingungen ergeben.

Bislang wurden resorbierbare Polyester nach dem sogenannten Satz-Betrieb (batch-Verfahren) in relativ kleinen Ansatzgrößen hergestellt. Ein wesentlicher Nachteil dieses Herstellungsverfahrens ist, daß die Temperaturführung im batch-Verfahren wegen der Exothermie der Reaktion und wegen der hohen Zähigkeit des Reaktionsgemisches, das nur schlecht zu rühren ist, nur in unzureichender Genauigkeit möglich ist. Zudem bereitet der Austrag der Polymerschmelze aus dem Reaktionsgefäß erhebliche Probleme. Besondere Probleme bereitet die Herstellung kristalliner Polymere im batch-Verfahren, wegen der dabei auftretenden Phasenüberganges flüssig-fest. Ein weiterer Nachteil des batch-Verfahrens sind die langen Reaktionszeiten, die bis zu 48h und länger sein können.

Es ist die Aufgabe der vorliegenden Erfindung, ein Polymerisationsverfahren zur Herstellung resorbierbarer Polyester bereitzustellen, das sowohl die Herstellung von amorphen wie auch kristallinen Polymeren ermöglicht und eine gute Temperaturführung während der Polymerisation ermöglicht.

Die Aufabe wird erfindungsgemäß durch eine unter kontrollierten Temperaturbedingungen durchgeführte kontinuierliche Polymerisation der eingesetzten Momomere erreicht.

Das erfindungsgemäße Verfahren ist dadurch gekennzeichnet, daß die Polymerisation in einem Doppelschneckenextruder mit unabhängig voneinander einstellbaren Temperatursegmenten unter Zwangsförderung erfolgt.

Extruder wie auch Doppelschneckenextruder, wie sie für das erfindungsgemäße Verfahren benutzt werden, sind im Prinzip bekannt und werden in der Regel in der kunststoffverarbeitenden Industrie zum Homogenisieren von Kunststoffgranulaten, eventuell unter Zumischen von Hilfsstoffen wie Füllstoffen oder Farbstoffen zur Erzeugung des notwendigen Vordrucks am formgebenden Werkzeug eingesetzt.

Erfindungsgemäß wird ein Doppelschneckenextruder als Polymerisationsreaktor eingesetzt.

Der schematische Aufbau eines zur Polymerisation geeigneten Extruders ist in Abb I dargestellt.

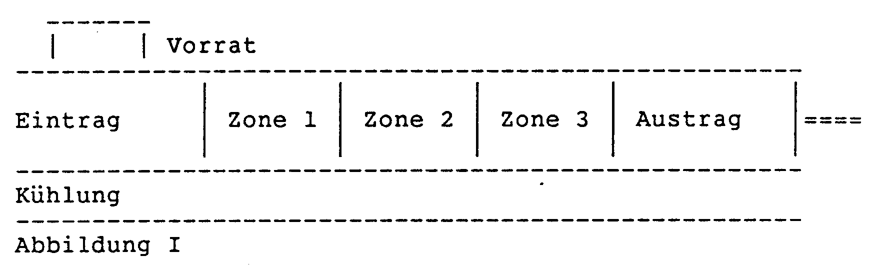

Zu dem Reaktor gehört ein Vorratsgefäß, in dem die Momomere oder Monomergemische, der Polymerisationskatalysator und eventuelle Hilfsstoffe als homogenes Gemisch vorgelegt werden. Zweckmäßigerweise liegen die Monomeren als Granulat oder Pulver vor. Über eine Fördereinrichtung erfolgt die Einspeisung der Reaktanden in den Extruder. Das erste Temperatursegment des Reaktors enthält zweckmäßigerweise eine Kühlvorrichtung, um ein vorzeitiges - ungewolltes - Aufschmelzen des Reaktionsgemisches, bzw. eine vorzeitige - unkontrollierte - Polymerisation zu verhindern.

Die Temperatur der nachfolgenden Heizsegmente wird so eingestellt, daß das Reaktionsgemisch sicher und homogen aufschmilzt und die Polymerisation abläuft. Durch die Zwangsförderung und Zwangsmischung im Extruder erreicht man eine homogene Temperaturverteilung im gesamten Querschnitt des Reaktors.

In einer anderen Ausführungsform des Verfahrens wird das Monomer oder ein Monomerengemisch als Schmelze aus einem ggf. beheiztem Vorratsgefäß des Extruder zugeführt.

Die Drehzahl des Extruders ist in gewissen Grenzen variabel - hierdurch läßt sich die Verweilzeit des Reaktionsgemisches einstellen. Dies ermöglicht in Abhängigkeit des eingestellten Temperaturprofils die Steuerung des Umsatzes und des Polymerisationsgrades in weiten Bereichen.

Die Anzahl der Temperatursegmente ist nicht kritisch, solange die Temperaturen entlang des Extruders auf die gewünschten Werte eingestellt werden können. Die Temperatur am Austrag sollte so eingestellt werden, daß das Polymer noch formbar ist und gegebenenfalls ein formgebendes Werkzeug angeschlossen werden kann. Der erfindungsgemäß verwendete Doppelschneckenextruder enthält Vorrichtungen, die eine Polymerisation unter Wasser und Feuchtigkeitsausschluß ermöglicht, so z.B. Vorrichtungen zur Erzeugung und Aufrechterhaltung einer Inertgasatmosphäre, z.B. aus Stickstoff oder Argon.

Der Reaktor kann mit reinen Monomeren oder Gemischen aus verschiedenen Monomeren beschickt werden, um Homopolymere oder Copolymere zu erhalten. Er kann aber auch mit Gemischen aus Präpolymeren und Monomeren beschickt werden. Bei dieser Ausführungsform des Verfahrens werden je nach Struktur des Präpolymeren Block - oder Pfropfpolymere erhalten.

In einer weiteren Ausführungsform enthält der Doppelschneckenextruder eine zusätzliche Vorrichtung zum Eintrag von Hilfsstoffen, wie z.B. Farbstoffe, Weichmacher, Pharmazeutika, Kontrastmittel etc. genutzt werden.

Im allgemeinen werden Monomere in den Vorratsbehälter eingebracht. Zur Herstellung bestimmter Copolymere ist es auch möglich, ein Polymerisat im Gemisch mit einem oder mehreren Monomeren im Vorratsbehälter vorzulegen und zu einem Copolymerisat zu verarbeiten.

Obwohl das erfindungsgemäße Verfahren nicht auf die Herstellung bestimmter resorbierbarer Polymere beschränkt ist, werden bevorzugt nachfolgend genannte Polymere und Copolymere hergestellt:
Poly(L-lactid)
   Poly(D,L-lactid)
   Poly(meso-lactid)
   Poly(glycolid)
   Poly(trimethylencarbonat)
   Poly(epsilon-caprolacton)
Poly(L-lactid-co-D,L-lactid)
   Poly(L-lactid-co-meso-lactid)
   Poly(L-lactid-co-glycolid)
   Poly(L-lactid-co-trimethylencarbonat)
   Poly(L-lactid-co-epsilon-caprolacton)
Poly(D,L-lactid-co-meso-lactid)
   Poly(D,L-lactid-co-glycolid)
   Poly(D,L-lactid-co-trimethylencarbonat)
   Poly(D,L-lactid-co-epsilon-caprolacton)
Poly(meso-lactid-co-glycolid)
   Poly(meso-lactid-co-trimethylencarbonat)
   Poly(meso-lactid-co-epsilon-caprolacton)
Poly(glycolid-co-trimethylencarbonat)
   Poly(glycolid-co-epsilon-caprolacton)

Geeignete Polymerisationskatalysatoren sind aus dem Stand der Technik bekannt, bevorzugt sind Zinnoctoat und Zinnsalze (z.B. SnCl₂ x 2 H₂O).

Im einzelnen können nachfolgend genannte Homo- und Copolymere bevorzugt nach dem erfindungsgemäßen Verfahren hergestellt werden.
1) Poly(L-Lactide) mit inhärenten Viskositäten zwischen 1 und 10. Bevorzugt werden Poly(L-Lactide) mit inhärenten Viskositäten zwischen 1 und 4. Besonders bevorzugt werden zur nachfolgenden Spritzgußverarbeitung besonders geeignete Polylactide mit inhärenten Viskositäten zwischen 2,0 und 3,5.
2) Poly(D,L-Lactide) mit inhärenten Viskositäten zwischen 0,1 und 4,0. Besonders bevorzugt werden Poly(D,L-Lactide) mit inhärenten Viskositäten zwischen 0,5 und 2,0.
3) Poly(meso-lactide) mit inhärenten Viskositäten zwischen 0,1 und 4,0.
4) Poly(glycolide) mit inhärenten Viskositäten zwischen 1,0 und 1,6, bevorzugt zwischen 1,1 und 1,3. Dabei wird die Einstellung der Verfahrensvariablen bevorzugt so gewählt, daß amorphe Polyglycolide entstehen.
5) Poly(L-lactid-co-D,L-lactide) und Poly(L-lactid-co-meso-lactide) mit Monomerenverhältnissen zwischen 99 : 1 und 1 : 99. Bevorzugt werden Monomerenverhältnisse zwischen 99 : 1 und 50 : 50. Besonders bevorzugt werden dabei die Verhältnisse zwischen 99 : 1 und 96 : 4 bzw. 95 : 5 und 70 : 30.
6) Poly(L-lactid-co-glycolide) mit Monomerenverhältnissen zwischen 99 : 1 und 1 : 99. Bevorzugt werden die Monomerenverhältnisse zwischen 99 : 1 und 50 : 50 sowie zwischen 20 : 80 und 1 : 99. Besonders bevorzugt werden dabei die Verhältnisse zwischen 95 : 5 und 70 : 30 sowie zwischen 15 : 85 und 5 : 95.
7) Poly(D,L-lactid-co-glycolide) mit Monomerenverhältnissen zwischen 99 : 1 und 1 :99. Bevorzugt werden die Monomerenverhältnisse zwischen 99 : 1 und 45 : 55, besonders bevorzugt zwischen 90 : 10 und 49 : 51. Bevorzugt werden bei diesen Polymeren inhärente Viskositäten zwischen 0,1 und 2,0, besonders bevorzugt zwischen 0,3 und 1,5.
8) Poly(glycolid-co-trimethylencarbonat) mit Monomerenverhältnissen zwischen 99 : 1 und 1 : 99. Bevorzugt wird der Bereich zwischen 99 : 1 und 50 : 50, besonders bevorzugt ist der Bereich zwischen 90 : 10 und 60 : 40. Die inhärente Viskosität der Polymeren liegt vorzugsweise im Bereich von 0,5 und 3,0, besonders bevorzugt von 1,0 bis 2,0.
9) Weitere Polymere, welche nach dem beanspruchten Verfahren vorteilhaft hergestellt werden können, sind z.B.
   Poly(trimethylencarbonat)
      Poly(L-lactid-co-trimethylencarbonat)
      Poly(D,L-lactid-co-meso-lactid),
      Poly(D,L-lactid-co-trimethylencarbonat)
      Poly(meso-lactid-co-glycolid)
      Poly(meso-lactid-co-trimethylencarbonat)

Verfahrensvariable, welche erfindungsgemäß so einzustellen sind, daß die Polymeren mit den bezüglich inhärenter Viskosität, Kristallinität, Löslichkeit oder Zusammensetzung gewünschten Eigenschaften entstehen, sind
Mischungsverhältnisse der Monomeren, Katalysatorkonzentration Verweilzeit ( Schneckendrehzahl, Extruderlänge), Temperatur in den einzelnen Zonen, Abkühlgeschwindigkeit.

Die inhärente Viskosität kann beispielsweise über die Katalysatorkonzentration gesteuert werden. Durch den Zusatz von Kettenabbruchreagenzien - wie z.B. Wasser - wird die inhärente Viskosität erniedrigt. Der Zusatz erfolgt zweckmäßigerweise in Form der entspechenden Hydroxycarbonsäuren, die einen definierten Wasseranteil aufweisen, z.B. in Form von Milchsäure oder Glycolsäure, die 10 % Wasser enthält. Die Kettenlänge kann - in gewissen Grenzen - durch die Temperatur der Heizsegmente gesteuert werden. Niedrigere Temperaturen führen zu längeren - höhere Temperaturen zu kürzeren Polymerketten.
Die inhärente Viskosität ist in dl/g bei einer Konzentration von 1 mg/ml in Hexafluracetonsesquihydrat bzw. Hexafluoraceton (Polyglycolid und Glycolid-Copolymere mit > 50 % Glycolid) oder in Chloroform (alle anderen Polymeren) bei 25°C angegeben. Die Mischungsverhältnisse der Copolymeren sind (soweit nicht anders angegeben) auf Mol-% bezogen

Die Vorteile des erfindungsgemäßen Verfahrens sind eine exakte Temperaturkontrolle, wodurch Nebenreaktionen, wie z.B. unerwünschte Umesterungen, verhindert werden. Überraschenderweise können nach dem erfindungsgemäßen Verfahren in einem Reaktortyp (Extruder) amorphe, teilkristalline und hochkristalline Polymere hergestellt werden, auch wenn die Reaktivität der eingesetzten Monomere in einem breiten Bereich liegt, wie es beispielsweise bei Glycolid und Lactid der Fall ist.

Der für die Polymerisation verwendete Extruder enthält einzelne Segmente, die verschieden temperiert werden können. Die Temperierung dieser Segmente kann beispielsweise so erfolgen, daß sich nach der eigentlichen Polymerisationszone eine Abkühlzone anschließt. Im Gegensatz zum batch-Verfahren, kann das Polymer bei dem erfindungsgemäßen Verfahren aufgrund der relativ geringen Substanzmenge im Extruder wie auch der kurzen Verweilzeit relativ schnell abgekühlt werden. Dadurch kann Einfluß auf die kristallinen Eigenschaften des Polymers genommen werden, d.h. es können je nach Dauer und Temperatur der Abkühlphase amorphe oder kristalline Polymere erhalten werden. Durch eine schnelle Abkühlung erhält man Polymere, die eine geringere Kristallanität aufweisen.

Überraschenderweise hat sich gezeigt, daß es gelingt Glycolid in dem erfindungsgemäßen Verfahren so zu polymerisieren, daß es als chirurgisches Nahtmaterial einsetzbar ist. Das Glycolid kann nach der Lehre der Deutschen Offenlegungsschriften 36 36 187 und 36 36 188 hergestellt werden, auf die hiermit Bezug genommen wird. Das nach dem erfindungsgemäßen Verfahren hergestellte Polyglycolid zeichnet sich im Gegensatz zu dem im Satz-Betrieb hergestellten Polyglycolid dadurch aus, daß es in HFIP (Hexafluorisopropanol) löslich ist und je nach Reaktionsbedingungen eine inhärente Viskosität zwischen 1,1 und 1,7 dl/g aufweist.

Durch geeignete Zusätze können auch höhere und niedrigere Viskositäten erzielt werden.

Die durch eine kontinuierliche Polymerisation hergestellten Homo-und Copolymere zur Herstellung von chirurgischen Gegenständen - wie z.B. Nahtmaterial, Vorrichtungen zur Osteoysnthese - und pharmazeutischen Wirkstoffträgern verwendet werden. Im folgenden werden stellvertretend einige Produkte zur medizinischen Verwendung genannt, die vorteilhaft aus katalysatorfreien Polymeren - hergestellt nach dem erfindungsgemäßen Verfahren - angefertigt werden können.

### 1. Massive Produkte, formgepreßt oder maschinell bearbeitet:

Orthopädische Dübel, Klammern, Schrauben und Platten,
Clips (z.B. für vena cava),
Krampen,
Haken, Knöpfe und Schnapper,
Knochenersatz (z.B. Kieferprothese),
Nadeln,
Nichtpermanente Intrauterineinsätze (antispermicid),
Temporäre Drainage- oder Prüfschläuche oder Kapillaren,
Chirurgische Instrumente,
Gefäßimplantate oder -stützmittel,
Wirbelscheiben,

Extrakorporale Schläuche für Nieren- und Herz-Lungenmaschinen.

Langsam aufschließbares Ionenaustauschharz, langsam aufschließbare, Wirkstoffe freigebende Erzeugnisse (Pillen, Pellets),
verstärkte Knochendübel, Nadeln usw.

Implantierbare mit Arzneistoffen beladene Pellets, Stifte, Folien und sonstige Formkörper zur kontrollierten Wirkstoff-Freigabe.

### 2. Faserprodukte, gestrickt oder gewebt, einschließlich Velour

Brandverbände, Bruchkissen,
Absorbierendes Papier oder Tupfer,
Medizinalverbände,
Gesichtsplastiken,
Gaze, Gewebe, Tuch, Filz oder Schwamm zur Hämostase,
Gaze-Bandagen,
Dentalpackungen,
Nahtmaterial, schließlich Ligaturen.

Arterientransplantat oder -ersatz
Bandagen für Hautoberflächen
Brandverbände (in Kombination mit anderen Polymerfilmen)

### 3. Pulverförmige Produkte, hergestellt durch

Sprühtrocknung, Mahlung, Fällung oder Mikroverkapselung.

Injizierbares oder implantierbares mit Arzneistoffen beladenes Pulver zur kontrollierten und verzögerten Freigabe des Wirkstoffes.

Mikroporöse Formkörper, Folien, Puder, Granulate zur Beladung mit Wirkstoffen.

### 4. Verschiedenes

Flocken oder Puder für Verbrennungen oder Abschürfungen, Schaumstoff als absorbierbare Prothese, Ersatz für Draht beim Schienen, Filmspray für prothetische Elemente und zur Wundversorgung.

### Beispiel 1

### Kontinuierliche Herstellung von Poly(glycolid)

In einem geeigneten Gefäß werden 0,1 g SnCl₂ x 2 H₂O, 2,2 g Dodecanol-1 in 50 ml Dichlormethan gelöst und mit 1 kg Glycolid unter leichtem Vakuum so vermischt, daß eine gleichmäßige Verteilung des Katalysators erreicht wird. Diese Mischung wird unter Schutzgas in einen Vorratstrichter überführt und von dort unter Schutzgasüberlagerung kontinuierlich über eine Schüttelrinne dem Eintragsteil eines Doppelschneckenextruders (Rheomex TW IOO, Fa. Haake-Buchler) mit drei Heizzonen, einer heizbaren, horizontalen Rundstrangdüse und einem Runddüseneinsatz von 1,6 mm Duchmesser zugeführt.

Der Extruder besitzt folgende Temperatureinstellungen:

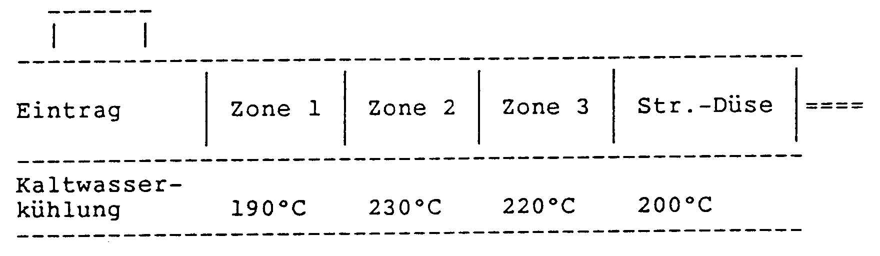

Die Drehzahl am Extruder wird auf 15 Umdrehungen pro Minute eingeregelt und mit einem Durchsatz von 320 g/Stunde kontinuierlich polymerisiert. Das erhaltene Poly(glycolid) besitzt eine inhärente Viskosität von 1,1 dl/g, gemessen bei einer Konzentration von 0,1 g/dl in HFIP bei 30°C.

### Beispiel 2

### Kontinuierliche Herstellung von Poly(glycolid)

In einem 10 1-Rundkolben werden 5 kg Glycolid vorgelegt und eine Lösung aus 11,0 g Dodecanol-1, 1,0 g SnCl₂ x 2 H₂H und 250 ml Dichlormethan portionsweise zugegeben. Unter Rotieren und leichtem Vakuum wird der Katalysator gleichmäßig verteilt. Diese Mischung wird unter Schutzgas in einen Vorratstrichter überführt und von dort unter Schutzgasüberlagerung kontinuierlich über eine Schüttelrinne dem Eintragsteil eines Doppelschneckenextruders mit drei Heizzonen, einer heizbaren, horizontalen Rundstrangdüse und einem Runddüseneinsatz von 1,6 mm Durchmesser zugeführt.

Der Extruder besitzt folgende Temperatureinstellungen:

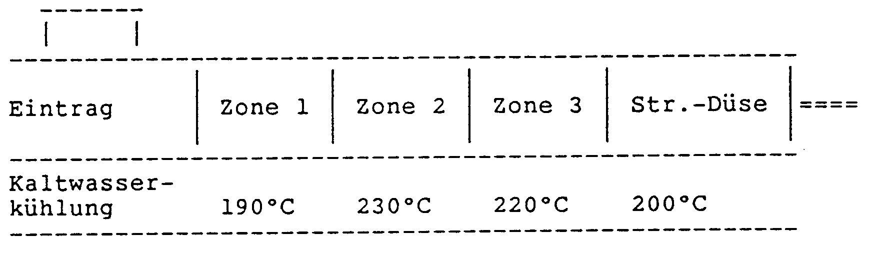

Die Drehzahl des Extruders wird über eine programmierbare Steuerung in den ersten zwei Minuten bei 25 Umdrehungen pro Minute gehalten, für drei Minuten auf 5 Umdrehungen pro Minute abgefahren und dann über die gesamte Polymerisationszeit bei 25 Umdrehungen pro Minute gehalten. Der Durchsatz beträgt in diesem Ansatz 1 200 g/Stunde, die Ausbeute 4,35 kg (87 % des Einsatzes).

Das erhaltene Poly(glycolid) besitzt eine inhärente Viskosität von 1,2 dl/g, gemessen bei einer Konzentration von 0,1 g/dl in HFIP bei 30°C. Die mit Essigester extrahierbaren Anteile liegen unter 1 %.

### Beispiel 3

### Kontinuierliche Herstellung von Poly(L-lactid)

Wie in Beispiel 2 beschrieben werden 1 kg L-Lactid und 0,6 g Octoat (Zinn(II)-di-2-ethylhexanoat) homogen vermischt.
Diese Mischung wird unter Schutzgas in einen Vorratstrichter überführt und von dort unter Schutzgasüberlagerung kontinuierlich über eine Schüttelrinne dem Eintragsteil eines Doppelschneckenextruders mit drei Heizzonen, einer heizbaren, horizontalen Rundstrangdüse und einem Runddüseneinsatz von 1,6 mm Durchmesser zugeführt.

Der Extruder besitzt folgende Temperatureinstellungen:

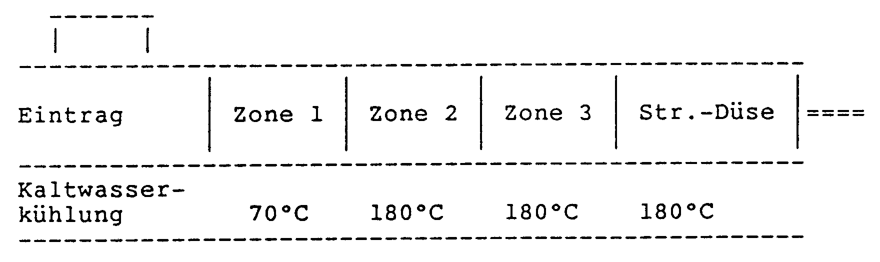

Die Drehzahl des Extruders wird über eine programmierbare Steuerung in den ersten zwei Minuten bei 25 Umdrehungen pro Minute gehalten, für fünfzehn Minuten auf 5 Umdrehungen pro Minute abgefahren und dann über die gesamte Polymerisationszeit bei 25 Umdrehungen pro Minute gehalten.

Der Durchsatz beträgt in diesem Ansatz 120 g/Stunde, der Umsatz ca. 70%.
Das erhaltene Poly(L-lactid) besitzt eine inhärente Viskosität von 1,0 dl/g, gemessen bei einer Konzentration von 0,1 g/dl in Chloroform bei 25°C.

### Beispiel 4

### Kontinuierliche Herstellung von Poly(D,L-lactid)

Wie in Beispiel 2 beschrieben werden 1 kg D,L-Lactid und 0,6 g Octoat (Zinn(II)-di-2-ethylhexanoat) homogen vermischt.
Diese Mischung wird unter Schutzgas in einen Vorratstrichter überführt und von dort unter Schutzgasüberlagerung kontinuierlich über eine Schüttelrinne dem Eintragsteil eines Doppelschneckenextruders mit drei Heizzonen, einer heizbaren, horizontalen Rundstrangdüse und einem Runddüseneinsatz von 1,6 mm Durchmesser zugeführt.

Der Extruder besitzt folgende Temperatureinstellungen:

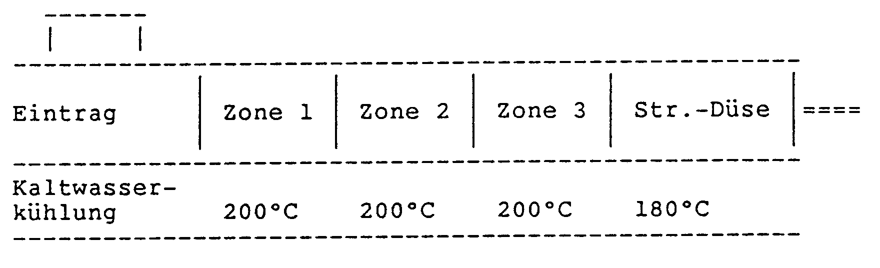

Die Drehzahl des Extruders wird über eine programmierbare Steuerung in den ersten zwei Minuten bei 25 Umdrehungen pro Minute gehalten, für drei Minuten auf 5 Umdrehungen pro Minute abgefahren und dann über die gesamte Polymerisationszeit bei 25 Umdrehungen pro Minute gehalten.

Der Durchsatz beträgt in diesem Ansatz 400 g/Stunde, der Umsatz ca. 86%.
Das erhaltene Poly(D,L-lactid) besitzt eine inhärente Viskosität von 1,2 dl/g, gemessen bei einer Konzentration von 0,1 g/dl in Chloroform bei 25°C.

### Beispiel 5

### Kontinuierliche Herstellung von Poly(D,L-lactid-co-glycolid) 50:50 mol %

348,5 g Glycolid und 432,5 g D,L-Lactid werden unter Schutzgas in einer Kugelmühle innig vermischt. Dann werden - wie in Beispiel 2 beschrieben - 0,467 g Octoat (Zinn(II)-di-2-ethylhexanoat) homogen verteilt. Diese Mischung wird unter Schutzgasüberlagerung kontinuierlich über eine Schüttelrinne dem Eintragsteil eines Doppelschneckenextruders mit drei Heizzonen, einer heizbaren, horizontalen Rundstrangdüse und einem Runddüseneinsatz von 1,6 mm Durchmesser zugeführt.

Der Extruder besitzt folgende Temperatureinstellungen:

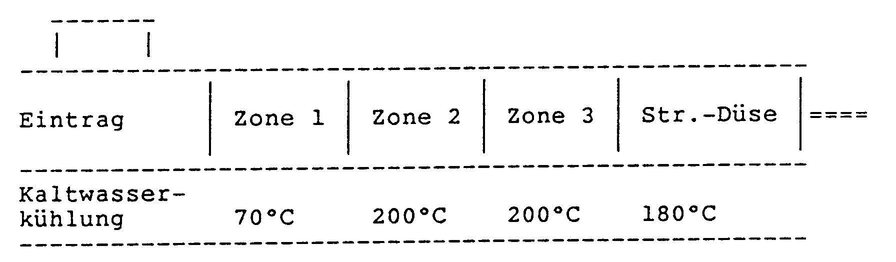

Die Drehzahl des Extruders wird über eine programmierbare Steuerung in den ersten zwei Minuten bei 25 Umdrehungen pro Minute gehalten, für fünf Minuten auf 5 Umdrehungen pro Minute abgefahren und dann über die gesamte Polymerisationszeit bei 25 Umdrehungen pro Minute gehalten.
Der Umsatz beträgt in diesem Ansatz ca. 72 %.
Das erhaltene Poly(D,L-lactid-co-glycolid) (50:50 mol %) besitzt eine inhärente Viskosität von 0,8 dl/g, gemessen bei einer Konzentration von 0,1 g/dl in Chloroform bei 25°C.

### Beispiel 6

### Kontinuierliche Herstellung von Poly(glycolid-co-trimethylencarbonat)

In einem geeigneten Gefäß werden 0,08 g SnCl₂ x 2H₂O und 1,16 g Diethylenglycol in 50 ml Dichlormethan gelöst und mit 364 g Glycolid unter Vakuum so vermischt, daß eine gleichmäßige Verteilung des Katalysators erreicht wird. Sodann werden 156 g Trimethylencarbonat hinzugefügt und die Mischung im Wasserbad bei 60-65°C aufgeschmolzen. Das Gemisch hat einen Katalysatorgehalt von 80 ppm Zinn. Die Schmelze wird unter Schutzgas in einen auf dem Eintragsteil eines Doppelschneckenextruder (Rheomex TW 100, Fa. Haake-Buchler) mit drei Heizzonen, einer heizbaren, horizontalen Rundstrangdüse und einem Runddüseneinsatz von 1,6 mm Durchmesser befestigten heizbaren Trichter eingefüllt.

Der Extruder besitzt folgende Temperatureinstellungen:

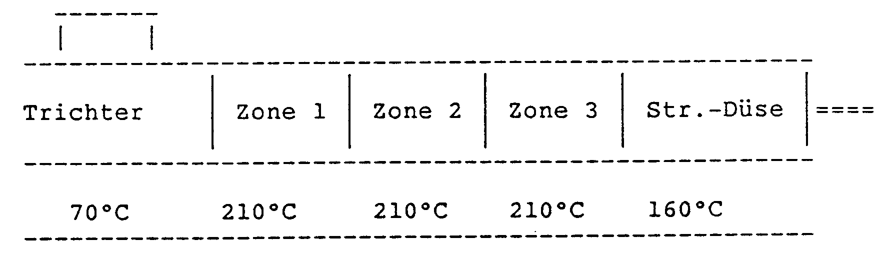

Die Drehzahl am Extruder wird auf 3 Umdrehungen pro Minute eingeregelt; mit einem Durchsatz von ca. 90 g/h wird kontinuierlich polymerisiert. Das erhaltene Poly(glycolid-co-trimethylencarbonat), besteht aus 28 % Trimethylencarbonat- und 72 % Glycolideinheiten (jeweils Gewichtsprozent) und besitzt eine inhärente Viskosität von 0,7 dl/g, gemessen bei einer Konzentration von 0,1 g/100 ml in HFIP bei 30°C.

### Beispiele 7 - 9

### Beispiel 6 wurde mit abgeänderten Versuchsbedingungen wiederholt:

| Monomeren-Verhältnis (Gewichtsteile) | Katalysator (ppm Sn) | Temperaturen Trichter Zonen 1-3 | | | Inh. Visk. (dl/g) |
|---|---|---|---|---|---|
| | | (°C) | (°C) | (°C) | |
| 24 : 76 | 80 | 80 | 210 | 160 | 0,8 |
| 24 : 76 | 30 | 85 | 180 | 160 | 1,1 |
| 30 : 70 | 30 | 85 | 180 | 160 | 0,65 |

## Patentansprüche

1. Verfahren zur Herstellung resorbierbarer Polyester aus der Gruppe,
Poly(L-lactid), Poly(D,L-lactid)
Poly(meso-lactid), Poly(glycolid)
Poly(trimethylencarbonat)
Poly(epsilon-caprolacton)
Poly(L-lactid-co-D,L-lactid)
Poly(L-lactid-co-meso-lactid)
Poly(L-lactid-co-glycolid)
Poly(L-lactid-co-trimethylencarbonat)
Poly(L-lactid-co-epsilon-caprolacton)
Poly(D,L-lactid-co-meso-lactid)
Poly(D,L-lactid-co-glycolid)
Poly(D,L-lactid-co-trimethylencarbonat)
Poly(D,L-lactid-co-epsilon-caprolacton)
Poly(meso-lactid-co-glycolid)
Poly(meso-lactid-co-trimethylencarbonat)
Poly(meso-lactid-co-epsilon-caprolacton)
Poly(glycolid-co-trimethylencarbonat)
Poly(glycolid-co-epsilon-caprolacton)
dadurch gekennzeichnet, daß das Polymerisations-Verfahren kontinuierlich in einem Doppelschneckenextruder, der mit temperierbaren Heizsegmenten versehen ist, unter Zwangsförderung durchgeführt wird, wobei die Menge an eingesetztem Katalysator O,O6 g auf 1OO g eingesetzte Monomere nicht überschreitet.

2. Verfahren nach Anspruch 1, zur Herstellung von Polyestern ausgewählt aus der Gruppe Poly(L-Lactide) mit inhärenten Viskositäten zwischen 1 und 10,
Poly(D,L-Lactide) mit inhärenten Viskositäten zwischen 0,1 und 4,0,
Poly(meso-lactide) mit inhärenten Viskositäten zwischen 0,1 und 4,0,
Poly(glycolide) mit inhärenten Viskositäten zwischen 1,0 und 1,6,
Poly(L-lactid-co-D,L-lactide) und Poly(L-lactid-co-meso-lactide) mit Monomerenverhältnissen zwischen 99:1 und 1:99, bevorzugt werden Monomerenverhältnisse zwischen 99 : 1 und 50 : 50,
Poly(L-lactide-co-glycolide) mit Monomerenverhältnissen zwischen 99 : 1 und 50 : 50 sowie zwischen 20 : 80 und 1 : 99,
Poly(D,L-lactid-co-glycolide) mit Monomerenverhältnissen zwischen 99 : 1 und 45 : 55, inhärente Viskositäten zwischen 0,1 und 2,0,
Poly(glycolid-co-trimethylencarbonat) mit Monomerenverhältnissen zwischen 99 : 1 und 50 : 50, mit inhärenten Viskositäten im Bereich von 0,5 bis 3,0.

3. Verfahren zur Herstellung resorbierbarer Polyester nach einem der Ansprüche 1 bis 2, dadurch gekennzeichnet, daß als Monomere cyclische Dimere von alpha-Hydroxycarbonsäuren eingesetzt werden.

4. Verfahren zur Herstellung resorbierbarer Polyester nach einem der Ansprüche 1 bis 2, dadurch gekennzeichnet, daß als Monomer Trimethylencarbonat eingesetzt wird.

5. Verfahren zur Herstellung resorbierbarer Polyester nach einem der Ansprüche 1 bis 2, dadurch gekennzeichnet, daß als Ausgangsmaterial Monomere und Präpolymere in das Verfahren eingesetzt werden.

## Claims

1. Process for the preparation of resorbable polyesters selected from the group:
poly(L-lactide), poly(D-L-lactide)
poly(meso-lactide), poly(glycolide)
poly(trimethylene carbonate)
poly(epsilon-caprolactone)
poly(L-lactide-co-D,L-lactide)
poly(L-lactide-co-meso-lactide)
poly(L-lactide-co-glycolide)
poly(L-Lactide-co-trimethylene carbonate)
poly(L-Lactide-co-epsilon-caprolactone)
poly(D,L-lactide-co-meso-lactide)
poly(D,L-lactide-co-glycolide)
poly(D,L-lactide-co-trimethylene carbonate)
poly(D,L-lactide-co-epsilon-caprolactone)
poly(meso-lactide-co-glycolide)
poly(meso-lactide-co-trimethylene carbonate)
poly(meso-lactide-co-epsilon-caprolactone)
poly(glycolide-co-trimethylene carbonate)
poly(glycolide-co-epsilon-caprolactone)
characterised in that the polymerisation process is carried out continuously in a twin screw extruder provided with heating segments the temperature of which can be regulated, the extruder having controlled charge, wherein the quantity of catalyst used does not exceed 0.06 g to 100 g of monomer used.

2. Process according to claim 1 for preparing polyesters selected from the group:
poly(L-lactides) having inherent viscosities of between 1 and 10,
poly(D,L-lactides) having inherent viscosities of between 0.1 and 4.0,
poly(meso-lactides) having inherent viscosities of between 0.1 and 4.0,
poly(glycolides) having inherent viscosities of between 1.0 and 1.6,
poly(L-lactide-co-D,L-lactides) and poly(L-lactide-co-meso-lactides) having monomer ratios of between 99:1 and 1:99, preferably monomer ratios of between 99:1 and 50:50,
poly(L-lactide-co-glycolides) having monomer ratios of between 99:1 and 50:50 and between 20:80 and 1:99,
poly(D,L-lactide-co-glycolides) having monomer ratios of between 99:1 and 45:55, and inherent viscosities of between 0.1 and 2.0,
poly(glycolide-co-trimethylene carbonate) having monomer ratios of between 99:1 and 50:50, and having inherent viscosities in the range between 0.5 and 3.0.

3. Process for the preparation of resorbable polyesters according to one of claims 1 to 2, characterised in that cyclic dimers of alpha-hydroxy-carboxylic acids are used as monomers.

4. Process for the preparation of resorbable polyesters according to one of claims 1 to 2, characterised in that trimethylene carbonate is used as a monomer.

5. Process for the preparation of resorbable polyesters according to one of claims 1 to 2, characterised in that monomers and prepolymers are used as starting materials in the process.

## Revendications

1. Procédé de préparation de polyesters résorbables du groupe des
poly(L-lactide), poly(D,L-lactide)
poly(méso-lactide), poly(glycolide)
poly(carbonate de triméthylène)
poly(epsilon-caprolactone)
copolymère (L-lactide-D,L-lactide)
copolymère (L-lactide-méso-lactide)
copolymère (L-lactide-glycolide)
copolymère (L-lactide-carbonate de triméthylène)
copolymère (L-lactide-epsilon-caprolactone)
copolymère (D,L-lactide-méso-lactide)
copolymère (D,L-lactide-glycolide)
copolymère (D,L-lactide-carbonate de triméthylène)
copolymère (D,L-lactide-epsilon-caprolactone)
copolymère (méso-lactide-glycolide)
copolymère (méso-lactide-carbonate de triméthylène)
copolymère (méso-lactide-epsilon-caprolactone)
copolymère (glycolide-carbonate de triméthylène)
copolymère (glycolid-epsilon-caprolactone)
caractérisé en ce que le procédé de polymérisation est mis en oeuvre en continu dans une extrudeuse à deux vis qui est munie de segments chauffants pouvant être maintenus à température constante, avec transport forcé, la quantité de catalyseur utilisé ne dépassant pas 0,06 g pour 100 g de monomères utilisés.

2. Procédé selon la revendication 1 pour la préparation de polyesters choisis dans le groupe des
poly(L-lactides) ayant des viscosités inhérentes situées entre 1 et 10,
poly(D,L-lactides) ayant des viscosités inhérentes situées entre 0,1 et 4,0,
poly(méso-lactides) ayant des viscosités inhérentes situées entre 0,1 et 4,0,
poly(glycolides) ayant des viscosités inhérentes situées entre 1,0 et 1,6,
copolymères (L-lactide-D,L-lactide) et copolymères (L-lactide-méso-lactide) ayant des rapports des monomères situés entre 99:1 et 1:99, de préférence entre 99:1 et 50:50,
copolymères (L-lactide-glycolide) ayant des rapports des monomères situés entre 99:1 et 50:50 ainsi qu'entre 20:80 et 1:99,
copolymères (D,L-lactide-glycolide) ayant des rapports des monomères situés entre 99:1 et 45:55, des viscosités inhérentes situées entre 0,1 et 2,0,
copolymères (glycolide-carbonate de triméthylène) ayant des rapports des monomères situés entre 99:1 et 50:50, des viscosités inhérentes situées entre 0,5 et 3,0.

3. Procédé de préparation de polyesters résorbables selon l'une des revendications 1 à 2 caractérisé en ce que l'on utilise comme monomères des dimères cycliques d'acides alpha-hydroxycarboxyliques.

4. Procédé de préparation de polyesters résorbables selon l'une des revendications 1 à 2 caractérisé en ce que l'on utilise comme monomère le carbonate de triméthylène.

5. Procédé de préparation de polyesters résorbables selon l'une des revendications 1 à 2 caractérisé en ce que l'on utilise comme produit de départ dans le procédé des monomères et des prépolymères.
